# EUROPEAN PATENT APPLICATION

(11) **EP 4 084 170 A1**
(43) Date of publication of application: **02.11.2022**
(21) Application number: 20905430.3
(22) Date of filing: 09.12.2020
(51) Int. Cl.: H01M 10/04, H01M 10/0585, H01M 50/409

(54) **LAMINATE FOR SECONDARY BATTERIES, SECONDARY BATTERY, AND METHOD FOR PRODUCING LAMINATE FOR SECONDARY BATTERIES**

(30) Priority: 27.12.2019 JP 2019239515
(71) Applicant: Zeon Corporation, Tokyo 100-8246 (JP)
(72) Inventor: TAKAGI Kazuki, Tokyo 100-8246 (JP)
(74) Representative: Schäflein, Christian Georg
(86) International application number: PCT/JP2020/045912
(87) International publication number: WO 2021/131715

(57) **Abstract**

Provided is a laminate for a secondary battery with which a secondary battery in which both safety and charging capacity are excellent can be produced. The laminate includes a negative electrode, a first separator affixed to one surface of the negative electrode, a positive electrode affixed to a surface of the first separator at an opposite side thereof to the negative electrode, and a second separator affixed to another surface of the negative electrode. In the laminate, at least part of a side surface of the positive electrode along a stacking direction is covered by a raised section where the first separator is deformed. When a surface where the first separator and positive electrode are in contact is taken as a reference surface, stacking direction height of the raised section from the reference surface is 15% to 130% of stacking direction height of the positive electrode from the reference surface.

## Description

### TECHNICAL FIELD

The present disclosure relates to a laminate for a secondary battery, a secondary battery, and a method of producing a laminate for a secondary battery.

### BACKGROUND

Secondary batteries such as lithium ion secondary batteries have characteristics such as compact size, light weight, high energy-density, and the ability to be repeatedly charged and discharged, and are used in a wide range of applications. A secondary battery generally includes battery members such as a positive electrode, a negative electrode, and a separator that isolates the positive electrode and the negative electrode from each other and prevents short circuiting between the positive and negative electrodes.

Known secondary battery structures include a stacked structure in which a positive electrode, a separator, and a negative electrode are stacked alternately and a wound structure in which an elongated positive electrode, separator, and negative electrode are overlapped and then wound up concentrically. In particular, stacked secondary batteries have been attracting interest in recent years from a viewpoint of having excellent energy density, safety, quality, and durability.

A technique of affixing an elongated electrode web and an elongated separator web and then performing cutting thereof to a specific length to produce a laminate for a secondary battery is conventionally adopted in production of secondary batteries (for example, refer to Patent Literature (PTL) 1 and 2).

### CITATION LIST

### Patent Literature

PTL 1: JP2018-81857A
PTL 2: JP2018-37143A

### SUMMARY

### (Technical Problem)

With regards to secondary batteries that include a conventional laminate for a secondary battery such as described above, there is demand for sufficiently preventing short circuiting between a positive electrode and a negative electrode and further ensuring safety while also increasing charging capacity.

Accordingly, an object of the present disclosure is to provide a laminate for a secondary battery with which it is possible to produce a secondary battery in which both safety and charging capacity are excellent and also to provide a secondary battery including this laminate for a secondary battery.

### (Solution to Problem)

The inventor conducted diligent studies with the aim of achieving the object described above. The inventor conceived that by, in production of a laminate for a secondary battery, covering a side surface of a positive electrode (positive electrode side surface) along a stacking direction with a raised section where part of a separator that is adjacent to the positive electrode in the stacking direction is deformed, it may be possible to prevent short circuiting caused by burrs or whiskers formed at the positive electrode side surface and thereby ensure safety of a secondary battery. In addition, the inventor discovered that by setting the raised section covering the positive electrode side surface as a specific height, it is possible to sufficiently ensure safety of a secondary battery including the laminate for a secondary battery while also causing the secondary battery to display excellent charging capacity. In this manner, the inventor completed the present disclosure.

Specifically, the present disclosure aims to advantageously solve the problem set forth above, and a presently disclosed laminate for a secondary battery comprises: a negative electrode; a first separator affixed to one surface of the negative electrode; a positive electrode affixed to a surface of the first separator at an opposite side of the first separator to the negative electrode; and a second separator affixed to another surface of the negative electrode, wherein at least part of a side surface of the positive electrode along a stacking direction is covered by a raised section where the first separator is deformed, and when a surface where the first separator and the positive electrode are in contact is taken as a reference surface, a stacking direction height of the raised section from the reference surface is not less than 15% and not more than 130% of a stacking direction height of the positive electrode from the reference surface. By covering the positive electrode side surface of the laminate for a secondary battery with a raised section of a specific height that is formed through deformation of the first separator separating the positive electrode and the negative electrode in this manner, it is possible to produce a secondary battery in which both safety and charging capacity are excellent using this laminate for a secondary battery.

In the presently disclosed laminate for a secondary battery, a distance between the side surface of the positive electrode that is covered by the raised section and an edge of the second separator in a direction orthogonal to the stacking direction is preferably not less than 285 µm and not more than 735 µm. When the distance from the positive electrode side surface covered by the raised section to an edge of the second separator is within the range set forth above, it is possible to sufficiently ensure safety of a secondary battery while also adopting a large positive electrode size (plan view area) so as to further improve charging capacity.

In the presently disclosed laminate for a secondary battery, the first separator preferably includes a separator substrate and a heat-resistant layer formed on at least one surface of the separator substrate. When a first separator that includes a heat-resistant layer at one or both surfaces is used, safety of a secondary battery can be further improved.

Moreover, the present disclosure aims to advantageously solve the problem set forth above, and a presently disclosed secondary battery comprises any one of the laminates for a secondary battery set forth above. By using any one of the laminates for a secondary battery set forth above, it is possible to produce a secondary battery in which both safety and charging capacity are excellent.

Furthermore, the present disclosure aims to advantageously solve the problem set forth above, and a first aspect of a presently disclosed method of producing a laminate for a secondary battery is a method of producing any one of the laminates for a secondary battery set forth above, comprising: a step of affixing an elongated first separator web to one surface of an elongated negative electrode web and affixing an elongated second separator web to a surface of the negative electrode web at an opposite side of the negative electrode web to the first separator web so as to obtain an elongated negative electrode laminate; a step of affixing a plurality of the positive electrode, at intervals, to a surface of the first separator web of the negative electrode laminate at an opposite side of the first separator web to the negative electrode web so as to obtain an elongated affixed body; a step of supplying a laser absorbing dye to an interval of the plurality of positive electrodes of the affixed body so as to provide a colored region at a surface of the first separator web of the affixed body; and a step of irradiating the colored region of the first separator web with a laser so as to cut the negative electrode laminate of the affixed body and cause melt-deformation of the first separator to form the raised section. The method of producing a laminate for a secondary battery set forth above enables efficient production of a laminate for a secondary battery with which it is possible to produce a secondary battery in which both safety and charging capacity are excellent.

Also, the present disclosure aims to advantageously solve the problem set forth above, and a second aspect of the presently disclosed method of producing a laminate for a secondary battery is a method of producing any one of the laminates for a secondary battery set forth above, comprising: a step of supplying a laser absorbing dye, at intervals, to one surface of an elongated negative electrode web so as to provide a plurality of colored regions; a step of affixing an elongated first separator web to the surface of the negative electrode web at which the colored regions are provided and affixing an elongated second separator web to a surface of the negative electrode web at an opposite side of the negative electrode web to the first separator web so as to obtain an elongated negative electrode laminate; a step of affixing a plurality of the positive electrode, at intervals, to a surface of the first separator web of the negative electrode laminate at an opposite side of the first separator web to the negative electrode web such that the plurality of positive electrodes do not overlap with regions that are opposite the colored regions with the first separator web in-between, and thereby obtaining an elongated affixed body; and a step of irradiating the regions of the first separator web of the affixed body that are opposite the colored regions with a laser so as to cut the negative electrode laminate of the affixed body and cause melt-deformation of the first separator to form the raised section. The method of producing a laminate for a secondary battery set forth above enables efficient production of a laminate for a secondary battery with which it is possible to produce a secondary battery in which both safety and charging capacity are excellent.

Moreover, the present disclosure aims to advantageously solve the problem set forth above, and a third aspect of the presently disclosed method of producing a laminate for a secondary battery is a method of producing any one of the laminates for a secondary battery set forth above, comprising: a step of sandwiching a plurality of the negative electrode, at intervals, between an elongated first separator web and an elongated second separator web so as to obtain a negative electrode laminate; a step of affixing a plurality of the positive electrode, at intervals, to a surface of the first separator web of the negative electrode laminate at an opposite side of the first separator web to the negative electrode such that the plurality of positive electrodes are opposite the plurality of negative electrodes with the first separator web in-between, and thereby obtaining an elongated affixed body; a step of supplying a laser absorbing dye to an interval of the plurality of positive electrodes of the affixed body so as to provide a colored region at a surface of the first separator web; and a step of irradiating the colored region of the first separator web with a laser so as to cut the negative electrode laminate of the affixed body and cause melt-deformation of the first separator to form the raised section. The method of producing a laminate for a secondary battery set forth above enables efficient production of a laminate for a secondary battery with which it is possible to produce a secondary battery in which both safety and charging capacity are excellent.

In any one of the presently disclosed methods of producing a laminate for a secondary battery set forth above, an interval of the plurality of positive electrodes when the plurality of positive electrodes are affixed to the surface of the first separator web is preferably not less than 600 µm and not more than 1,500 µm. When intervals in arrangement of the plurality of positive electrodes are within the range set forth above, this facilitates supply of the laser absorbing dye and cutting by the laser and also enables good formation of the raised section covering the positive electrode side surface. Moreover, when intervals in arrangement of the plurality of positive electrodes are within the range set forth above, it is possible to sufficiently ensure safety of a secondary battery while also adopting a large positive electrode size (plan view area) so as to further improve charging capacity.

### (Advantageous Effect)

According to the present disclosure, it is possible to obtain a laminate for a secondary battery with which it is possible to produce a secondary battery in which both safety and charging capacity are excellent.

Moreover, according to the present disclosure, it is possible to obtain a secondary battery in which both safety and charging capacity are excellent.

### BRIEF DESCRIPTION OF THE DRAWINGS

In the accompanying drawings:
FIG. 1 is a front view illustrating the structure of one example of a laminate for a secondary battery;
FIG. 2 is a front view illustrating the structure of another example of a laminate for a secondary battery;
FIG. 3 is a front view illustrating the structure of one example of a stack obtained through stacking of laminates for a secondary battery;
FIG. 4 is an explanatory diagram illustrating, in enlarged form, one part of the front view of the laminate for a secondary battery in FIG. 1;
FIGS. 5A and 5B are explanatory diagrams illustrating one example of a production process of a laminate for a secondary battery;
FIGS. 6A to 6C are explanatory diagrams illustrating another example of a production process of a laminate for a secondary battery; and
FIGS. 7A to 7C are explanatory diagrams illustrating yet another example of a production process of a laminate for a secondary battery.

### DETAILED DESCRIPTION

The following describes the presently disclosed laminate for a secondary battery, secondary battery, and method of producing a laminate for a secondary battery with reference to the drawings. Note that the dimensions of some members in the drawings are enlarged or reduced in order to facilitate understanding.

### (Laminate for secondary battery)

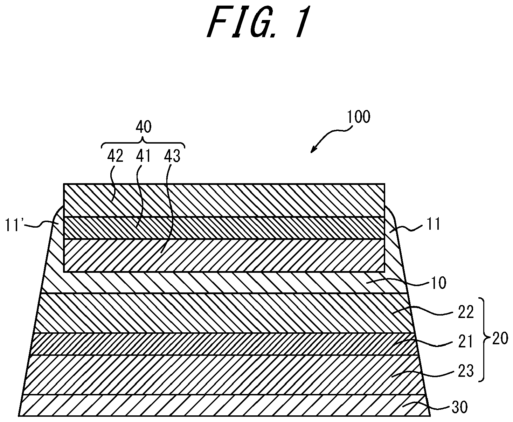

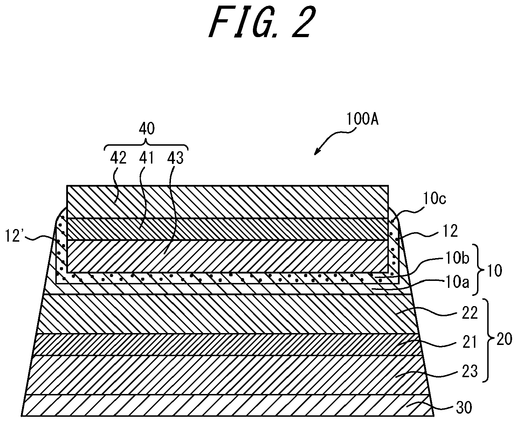

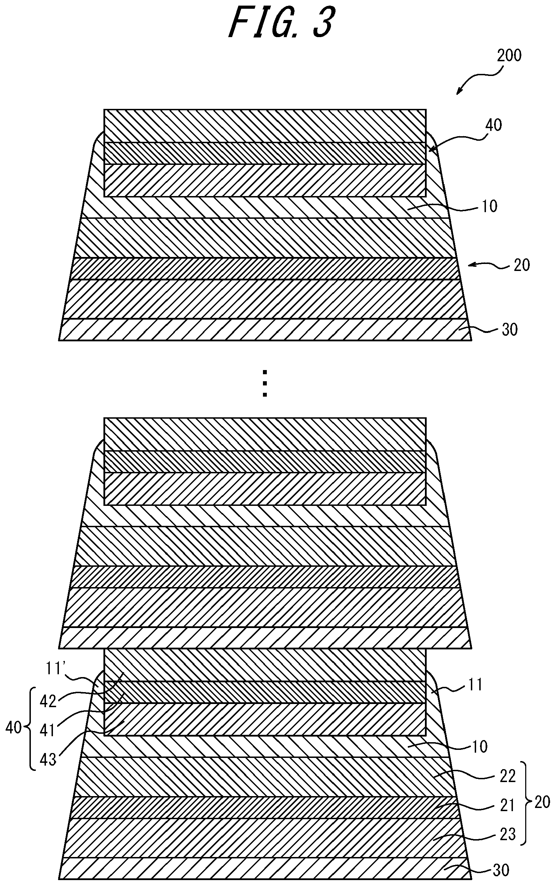

The presently disclosed laminate for a secondary battery has a structure such as illustrated in FIG. 1 or FIG. 2, for example. Moreover, the laminate for a secondary battery can be stacked in plurality in a stacking direction to obtain a stack (for example, a stack 200 illustrated in FIG. 3), and can then be used in a stacked secondary battery or the like.

A laminate for a secondary battery 100 illustrated in the front view of FIG. 1 includes a negative electrode 20, a first separator 10 affixed to one surface (upper surface in FIG. 1) of the negative electrode 20, a positive electrode 40 affixed to a surface of the first separator 10 at an opposite side thereof (upper side in FIG. 1) to the negative electrode 20, and a second separator 30 affixed to the other surface (lower surface in FIG. 1) of the negative electrode 20. In the example illustrated in FIG. 1, the negative electrode 20 has a structure in which negative electrode mixed material layers 22 and 23 containing a negative electrode active material are formed at both surfaces of a negative electrode current collector 21, and the positive electrode 40 has a structure in which positive electrode mixed material layers 42 and 43 containing a positive electrode active material are formed at both surfaces of a positive electrode current collector 41.

Moreover, both end sections of the first separator 10 in a direction orthogonal to the stacking direction are deformed so as to protrude in a direction toward a side where the positive electrode 40 of the laminate for a secondary battery 100 is arranged (upward direction in FIG. 1) and form raised sections 11 and 11' covering a side surface of the positive electrode 40.

A laminate for a secondary battery 100A illustrated in the front view of FIG. 2 has the same configuration as the laminate for a secondary battery 100 illustrated in FIG. 1 with the exception of the first separator and the raised sections. Specifically, in the laminate for a secondary battery 100A, the first separator 10 includes a separator substrate 10a and a heat-resistant layer 10b that is included at a surface of the separator substrate 10a at the same side thereof as the positive electrode 40. Heat-resistant fine particles 10c originating from the heat-resistant layer 10b are dispersed in raised sections 12 and 12' that are formed through deformation of end sections of the first separator 10.

In the presently disclosed laminate for a secondary battery, the negative electrode preferably has a larger size in plan view than the positive electrode, such as in the laminate for a secondary battery 100 illustrated in FIG. 1 and the laminate for a secondary battery 100A illustrated in FIG. 2, from a viewpoint of improving safety of a secondary battery. From the same viewpoint, the first separator and the second separator preferably have a larger size in plan view than the positive electrode.

It should be noted that the presently disclosed laminate for a secondary battery is not limited to the examples illustrated in FIG. 1 and FIG. 2. For example, although the laminate for a secondary battery 100 illustrated in FIG. 1 and the laminate for a secondary battery 100A illustrated in FIG. 2 have a rectangular plan view shape as one example, the plan view shape of the presently disclosed laminate for a secondary battery is not limited thereto and may be any shape such as a circular plan view shape or an elliptical plan view shape. Moreover, although the second separator 30 does not include a heat-resistant layer in the laminate for a secondary battery 100 illustrated in FIG. 1 and the laminate for a secondary battery 100A illustrated in FIG. 2, the presently disclosed laminate for a secondary battery is not limited thereto, and the second separator may include a separator substrate and a heat-resistant layer formed on at least one surface of the separator substrate.

### <Negative electrode and positive electrode>

Known electrodes can be used as the electrodes (positive electrode and negative electrode) without any specific limitations. The known electrodes may, for example, each be an electrode that has an electrode mixed material layer formed at one surface or both surfaces of a current collector.

Note that any current collector and electrode mixed material layer that can be used in the field of secondary batteries, such as any of those described in JP2013-145763A, for example, can be used as the current collector and electrode mixed material layer without any specific limitations.

### <First separator and second separator>

Each of the separators (first separator and second separator) is not specifically limited and may, for example, be a separator that is formed of a separator substrate or a separator that has a heat-resistant layer formed at one surface or both surfaces of a separator substrate. However, a separator having a heat-resistant layer formed at one surface or both surfaces of a separator substrate is preferable from a viewpoint of further improving safety of a secondary battery.

### «Separator substrate»

The separator substrate is not specifically limited and may be any separator substrate that can be used in the field of secondary batteries such as an organic separator substrate, for example. The organic separator substrate is a porous member that is formed of an organic material (particularly a resin). Preferable examples of the organic separator substrate include microporous membranes that contain a polyolefin resin such as polyethylene or polypropylene, an aromatic polyamide resin, or the like, with a polyethylene microporous membrane being more preferable in terms of having excellent strength.

Alternatively, the organic separator substrate may be non-woven fabric of a polyolefin resin such as polyethylene or polypropylene, an aromatic polyamide resin, a polyester resin, cellulose fiber, or the like.

### <Heat-resistant layer>

A heat-resistant layer that is optionally provided on at least one surface of the above-described separator substrate can be any heat-resistant layer that can be used in the field of secondary batteries without any specific limitations. For example, a layer obtained by binding heat-resistant fine particles using a binder may be used as the heat-resistant layer.

### «Heat-resistant fine particles»

Both inorganic fine particles and organic fine particles can be used as the heat-resistant fine particles. Note that the heat-resistant fine particles referred to in the present disclosure have a heat resistance temperature (temperature at which substantial physical change such as heat deformation does not occur) of 200°C or higher. The material of the heat-resistant fine particles is preferably an electrochemically stable material that is present stably in the environment of use of a secondary battery.

The organic fine particles may be fine particles of a cross-linked polymer such as a polyimide, melamine resin, phenolic resin, cross-linked polymethyl methacrylate (cross-linked PMMA), cross-linked polystyrene (cross-linked PS), polydivinylbenzene (PDVB), or benzoguanamine-formaldehyde condensate; or fine particles of a heat-resistant polymer such as thermoplastic polyimide. The organic resin forming such organic fine particles may be a mixture, modified product, derivative, copolymer (random copolymer, alternating copolymer, block copolymer, or graft copolymer), or cross-linked product (in the case of a heat-resistant polymer such as described above) of any of the polymeric materials given as examples above.

The inorganic fine particles may be particles of an oxide such as aluminum oxide (alumina), hydrous aluminum oxide (boehmite), silicon oxide, magnesium oxide (magnesia), calcium oxide, titanium oxide (titania), BaTiO₃, ZrO, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or fine particles of clay such as talc or montmorillonite. These particles may be subjected to element substitution, surface treatment, solid solution treatment, and/or the like as necessary.

One of these types of heat-resistant fine particles may be used individually, or two or more of these types of heat-resistant fine particles may be used in combination.

### «Binder»

Any binder that is used in the field of secondary batteries can be used as the binder without any specific limitations so long as it does not impair battery reactions. In particular, a binder that is formed of a polymer is preferably used as the binder. Note that the binder may be formed of just one type of polymer or may be formed of two or more types of polymers.

Also note that the binder normally has a heat resistance temperature of lower than 200°C and differs from the organic fine particles described above as heat-resistant fine particles.

Examples of polymers that can be used as the binder include, but are not specifically limited to, fluoropolymers such as polyvinylidene fluoride and polyvinylidene fluoride-hexafluoropropylene (PVdF-HFP) copolymer; conjugated diene polymers such as styrene-butadiene copolymer (SBR) and acrylonitrile-butadiene copolymer (NBR); hydrogenated products of conjugated diene polymers; polymers that include a (meth)acrylic acid alkyl ester monomer unit (acrylic polymers); and polyvinyl alcohol polymers such as polyvinyl alcohol (PVA).

Note that in the present disclosure, "(meth)acrylic acid" is used to indicate "acrylic acid" and/or "methacrylic acid".

The form of the binder formed of a polymer is not specifically limited and may be a particulate form, a non-particulate form, or a combination of a particulate form and a non-particulate form.

Note that in a case in which the binder formed of a polymer has a particulate form, that particulate binder may be monophase structure particles that are formed from a single polymer or may be heterophase structure particles that are formed through physical or chemical bonding of two or more different polymers. Specific examples of heterophase structures include a core-shell structure in which a central portion (core portion) and an outer shell (shell portion) of a spherical particle are formed from different polymers; and a side-by-side structure in which two or more polymers are disposed alongside each other. Note that the term "core-shell structure" as used in the present disclosure is inclusive of a structure in which a shell portion completely covers an outer surface of a core portion and also of a structure in which a shell portion partially covers an outer surface of a core portion. In terms of external appearance, even in a situation in which the outer surface of a core portion appears to be completely covered by a shell portion, the shell portion is still considered to be a shell portion that partially covers the outer surface of the core portion so long as pores are formed that pass between inside and outside of the shell portion.

### <Raised section>

The raised section is a site that is formed as a result of deformation of the previously described first separator. Therefore, the raised section is normally formed of the same material as the first separator. For example, in a case in which the first separator is a separator substrate that is formed of a resin, the raised section is also formed of that resin. Moreover, in a case in which the first separator includes a separator substrate that is formed of a resin and a heat-resistant layer that contains heat-resistant fine particles and a binder, the raised section may, for example, have a configuration in which the heat-resistant fine particles are dispersed in a matrix that is formed of at least one component among the binder and the resin.

Note that because the raised section is formed of the same material as the first separator as described above, the raised section does not normally contain constituent components of an electrode (particularly an electrode mixed material layer) such as an electrode active material (positive electrode active material or negative electrode active material) and a conductive material. In other words, the raised section of the presently disclosed laminate for a secondary battery is clearly different from a site formed through a resin that forms a separator permeating into an electrode mixed material layer of an electrode (for example, a resin permeation section described in JP2018-81857A).

The raised section that protrudes from the first separator is required to cover a side surface, along the stacking direction, of the positive electrode that is stacked adjacently to the first separator. When the raised section is said to "cover" a positive electrode side surface, this means that the raised section is required to be in contact with at least part of the positive electrode side surface. Even when a raised section is formed on a first separator, it is not possible to sufficiently inhibit short circuiting caused by burrs and/or whiskers formed at a positive electrode side surface in a case in which the raised section and the positive electrode side surface are physically separated. Consequently, the safety of a secondary battery cannot be improved to the expected level.

The raised section is also required to have a specific height. Specifically, when a surface where the first separator and the positive electrode are in contact is taken to be a reference surface, the stacking direction height of the raised section from the reference surface is required to be not less than 15% and not more than 130% relative to the stacking direction height (thickness) of the positive electrode from the reference surface, which is taken to be 100%, is preferably 30% or more, and more preferably 40% or more relative thereto, and is preferably 120% or less, more preferably 110% or less, and even more preferably 100% or less relative thereto. When the ratio of the height of the raised section relative to the height of the positive electrode is less than 15%, it is not possible to sufficiently inhibit short circuiting caused by burrs and/or whiskers formed at the positive electrode side surface. Consequently, the safety of a secondary battery cannot be improved to the expected level. On the other hand, when the ratio of the height of the raised section relative to the height of the positive electrode is more than 150%, the raised section excessively protrudes beyond the positive electrode, and thus good stacking of a plurality of laminates for a secondary battery is not possible. This results in reduction of charging capacity of a secondary battery.

Note that in calculation of the ratio of the height of the raised section relative to the height of the positive electrode in the present disclosure, the "stacking direction height of the raised section from the reference surface" and the "stacking direction height of the positive electrode from the reference surface" are each taken to be an average value of heights at 5 arbitrary points. Various dimensions of the laminate for a secondary battery referred in the present disclosure can be measured by a method described in the EXAMPLES section.

Moreover, the ratio of the height of the raised section relative to the height of the positive electrode can be controlled by adjusting the height of the positive electrode and/or the raised section. For example, the height of the raised section can be controlled by adjusting production conditions (type of laser absorbing dye, laser power, distance between laser irradiation position and positive electrode, etc.) in the presently disclosed method of producing a laminate for a secondary battery that is described further below or by altering the type of resin that forms the first separator.

The stacking direction height (average value of heights at 5 arbitrary points) of the raised section from the reference surface is preferably 20 µm or more, more preferably 30 µm or more, even more preferably 40 µm or more, and particularly preferably 52 µm or more, and is preferably 150 µm or less, more preferably 130 µm or less, even more preferably 100 µm or less, and particularly preferably 97 µm or less.

On the other hand, the stacking direction height (average value of heights at 5 arbitrary points) of the positive electrode from the reference surface is preferably 50 µm or more, more preferably 75 µm or more, and even more preferably 100 µm or more, and is preferably 190 µm or less, more preferably 165 µm or less, and even more preferably 140 µm or less.

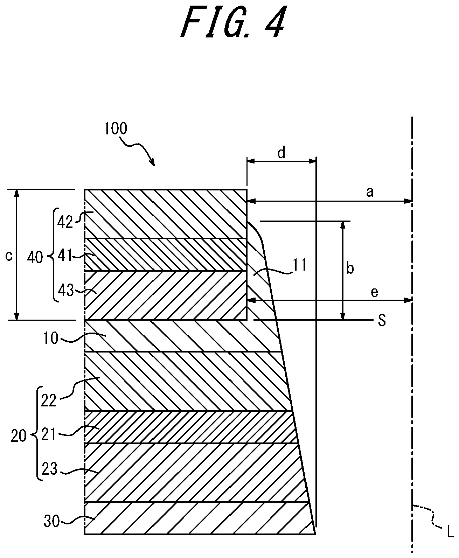

The ratio of the height of the raised section relative to the height of the positive electrode and so forth are further described using FIG. 4. FIG. 4 illustrates, in enlarged form, an edge section of the laminate for a secondary battery 100 illustrated in FIG. 1.

In FIG. 4, a reference surface S is a surface where the first separator 10 and the positive electrode 40 (positive electrode mixed material layer 43 thereof) are in contact and that is orthogonal to the stacking direction of the laminate for a secondary battery. The "stacking direction height of the raised section from the reference surface" corresponds to a height b of the raised section 11 from the reference surface S in the laminate for a secondary battery 100 illustrated in FIG. 4. Moreover, the "stacking direction height of the positive electrode from the reference surface" corresponds to a height c of the positive electrode 40 from the reference surface S in the laminate for a secondary battery 100 illustrated in FIG. 4.

In the presently disclosed laminate for a secondary battery, the distance (corresponding to d in FIG. 4) between the positive electrode side surface that is covered by the raised section described above and an edge of the second separator in a direction orthogonal to the stacking direction is preferably 285 µm or more, and more preferably 335 µm or more, and is preferably 735 µm or less, and more preferably 585 µm or less. When the distance from the positive electrode side surface covered by the raised section to the edge of the second separator is within any of the ranges set forth above, the positive electrode side surface can be covered well by the raised section, and safety of a secondary battery can be sufficiently ensured while also adopting a large positive electrode size (plan view area) so as to further improve charging capacity.

### (Secondary battery)

The presently disclosed secondary battery includes the presently disclosed laminate for a secondary battery set forth above. For example, the presently disclosed secondary battery may include a stack obtained through stacking of a plurality of laminates for a secondary battery, additional battery members (electrode and/or separator, etc.) that are provided as necessary, an electrolyte solution, and a battery container in which these are housed.

The electrolyte solution is normally an organic electrolyte solution obtained by dissolving a supporting electrolyte in an organic solvent. In a case in which the secondary battery is a lithium ion secondary battery, for example, a lithium salt is used as the supporting electrolyte. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

The secondary battery can be assembled by further stacking additional battery members (electrode and/or separator, etc.), as necessary, with a stack obtained through stacking of the presently disclosed laminate for a secondary battery, subsequently placing the resultant laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device, an expanded metal, a lead plate, or the like may be provided as necessary. The shape of the secondary battery may, for example, be a coin type, button type, sheet type, cylinder type, prismatic type, or flat type.

### (Method of producing laminate for secondary battery)

The presently disclosed laminate for a secondary battery set forth above can, for example, be produced using the presently disclosed method of producing a laminate for a secondary battery. In the presently disclosed method of producing a laminate for a secondary battery, a dye that absorbs a laser (laser absorbing dye) is used to draw a colored region having a shape in accordance with a specific planned cutting location, and then the colored region is irradiated with a laser so as to cut a first separator web and cause melt-deformation of an end section of a single-sheet first separator resulting from this cutting, thereby enabling efficient formation of a raised section covering a positive electrode side surface.

By using a laser instead of a cutting blade made of metal or the like in the presently disclosed method of producing a laminate for a secondary battery, it is possible to avoid the formation of chips from the cutting blade while also not experiencing downtime due to degradation and replacement of the cutting blade.

The following describes the presently disclosed method of producing a laminate for a secondary battery through first, second, and third aspects thereof.

### <First aspect>

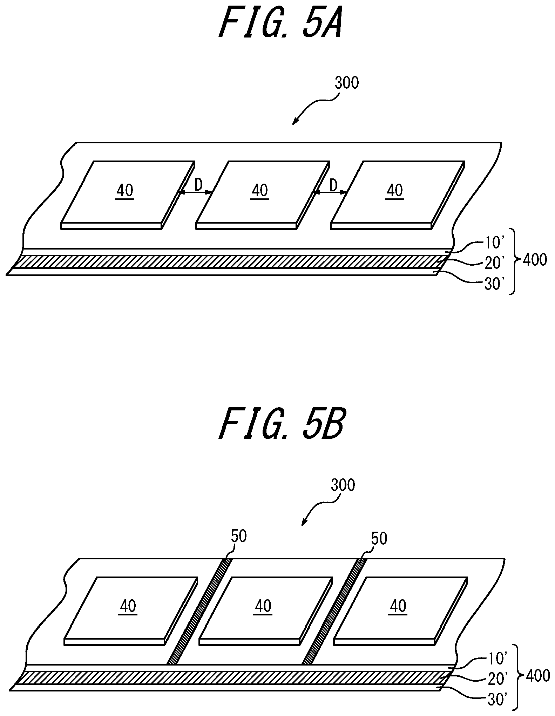

A first aspect of the presently disclosed production method is described below with reference to FIGS. 5A and 5B. The first aspect of the presently disclosed production method includes at least:
a step (1-1) of affixing an elongated first separator web to one surface of an elongated negative electrode web and affixing an elongated second separator web to a surface of the negative electrode web at an opposite side thereof to the first separator web so as to obtain an elongated negative electrode laminate;
a step (1-2) of affixing a plurality of positive electrodes, at intervals, to a surface of the first separator web of the negative electrode laminate obtained in the step (1-1) at an opposite side thereof to the negative electrode web so as to obtain an affixed body;
a step (1-3) of supplying a laser absorbing dye to an interval of the plurality of positive electrodes of the affixed body obtained in the step (1-2) so as to provide a colored region at a surface of the first separator web of the affixed body; and
a step (1-4) of irradiating the colored region of the first separator web provided in the step (1-3) with a laser so as to cut the negative electrode laminate of the affixed body and cause melt-deformation of a first separator to form a raised section.

### «Step (1-1)»

In the step (1-1), a negative electrode laminate having an elongated negative electrode web sandwiched between an elongated first separator web and an elongated second separator web is obtained. No specific limitations are placed on the method by which the negative electrode web is affixed to the first separator web and the second separator web. For example, the affixing can be performed by applying an adhesive material at an affixing surface of the members that are to be affixed to each other and then affixing the members via the adhesive material by a roll-to-roll method or the like.

The adhesive material is not specifically limited and can be any of the same materials as for the binder previously described in the "Laminate for secondary battery" section.

The adhesive material can be supplied to the affixing surface in any state, such as a solid state, a molten state, a dissolved state in a solvent, or a dispersed state in a solvent. In particular, it is preferable that the adhesive material is supplied in a dissolved state in a solvent or a dispersed state in a solvent, and more preferable that the adhesive material is supplied in a dispersed state in a solvent.

In a case in which the adhesive material is supplied to the affixing surface in a dissolved state in a solvent or a dispersed state in a solvent (i.e., in a case in which a composition for adhesion containing the adhesive material and a solvent is supplied to the affixing surface), the solvent of the composition for adhesion can be water, an organic solvent, or a mixture thereof, for example, without any specific limitations. Examples of organic solvents that can be used include, but are not specifically limited to, alicyclic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; nitriles such as acetonitrile and propionitrile; ethers such as tetrahydrofuran and ethylene glycol diethyl ether; and alcohols such as methanol, ethanol, isopropanol, ethylene glycol, and ethylene glycol monomethyl ether.

Of the examples given above, water and alcohols are preferable as the solvent from a viewpoint of efficiently producing a laminate for a secondary battery, with water being more preferable.

Application of the adhesive material can be performed by a known application method such as an inkjet, spraying, dispensing, gravure coating, or screen printing method. Of these application methods, it is preferable that the adhesive material is applied using an inkjet method from a viewpoint of enabling simple adjustment of the amount and range of application of the adhesive material.

The adhesive material may be applied over the entirety of the affixing surface or may be applied to only part of the affixing surface. In a case in which the adhesive material is applied to only part of the affixing surface, the adhesive material may be applied such as to have any plan view shape, such as a striped shape, a dotted shape, or a lattice shape, without any specific limitations. Of these shapes, application of the adhesive material with a dotted shape is preferable from a viewpoint of increasing injectability of electrolyte solution in production of a secondary battery using a laminate for a secondary battery. Moreover, the dotted adhesive material may be disposed (applied) uniformly over the entirety of the affixing surface or may be disposed (applied) such as to be arranged in a specific pattern, such as a striped pattern, a dotted pattern, or a lattice pattern. Note that in a case in which a fine dotted adhesive material is to be arranged in a specific pattern, it is preferable that the adhesive material is applied by an inkjet method from a viewpoint of ease of application and arrangement of the adhesive material.

The cross-sectional shape of the adhesive material may be a protruding shape, a depressed/protruding shape, or a depressed shape without any specific limitations, of which, a depressed/protruding shape is preferable. Note that the cross-sectional shape of the adhesive material can be altered by adjusting the drying conditions in application of the adhesive material, for example.

### «Step (1-2)»

In the step (1-2), a plurality of single-sheet positive electrodes are affixed, at specific intervals, to a surface at the first separator web side of the negative electrode laminate obtained in the step (1-1) so as to obtain an elongated affixed body. The method by which the positive electrodes are affixed to the negative electrode laminate is not specifically limited and can, for example, be a method using an adhesive material such as previously described for the step (1-1).

FIG. 5A illustrates an affixed body 300 that is one example of the affixed body. The affixed body 300 includes a negative electrode laminate 400 and a plurality of positive electrodes 40. The negative electrode laminate 400 includes a first separator web 10', a negative electrode web 20', and a second separator web 30' stacked in stated order. The positive electrodes 40 are arranged on the first separator web 10' of the negative electrode laminate 400 at specific intervals D in a longitudinal direction of the affixed body 300.

The intervals between the positive electrodes arranged in plurality on the first separator web of the negative electrode laminate (minimum distance between two adjacent positive electrodes in plan view; corresponding to D in FIG. 5A) is preferably 600 µm or more, and more preferably 700 µm or more, and is preferably 1,500 µm or less, and preferably 1,000 µm or less. When the plurality of positive electrodes on the first separator web are arranged at intervals of 600 µm or more, this facilitates supply of a laser absorbing dye and cutting by a laser. On the other hand, when the intervals are 1,500 µm or less, a raised section covering a positive electrode side surface can be formed well through cutting and melting of the first separator web by laser irradiation. Moreover, when the intervals are within any of the ranges set forth above, it is possible to sufficiently ensure safety of a secondary battery while also adopting a large positive electrode size (plan view area) so as to further improve charging capacity.

### «Step (1-3)»

In the step (1-3), a laser absorbing dye is supplied between the plurality of positive electrodes of the affixed body obtained in the step (1-2) so as to form a colored region at the first separator web surface of the affixed body.

The laser absorbing dye is not specifically limited so long as it can efficiently absorb a laser used in the subsequently described step (1-4) and enables cutting of the negative electrode laminate including the first separator web through heat. For example, a blue, red, purple, gray, or black dye may be used. In a situation in which laser irradiation is performed without providing a colored region formed of a laser absorbing dye, this causes excessive contraction of a first separator and/or second separator formed through cutting and loss of second battery safety. It also becomes difficult to control the height of the raised section.

Any method such as application or spraying can be adopted as the method by which the laser absorbing dye is supplied without any specific limitations.

The shape of the colored region can be set as appropriate in accordance with the plan view shape of the target laminate for a secondary battery. For example, in the example illustrated in FIG. 5B, a colored region 50 provided between two adjacent positive electrodes 40 is formed with a linear shape (rectangular shape) in a width direction of an affixed body 300 (direction orthogonal to a longitudinal direction). Moreover, the colored region 50 extends continuously from one end of the affixed body 300 in the width direction to the other end of the affixed body 300 in the width direction. As previously described, the shape of the colored region is not limited to a linear shape such as illustrated in FIG. 5B. For example, in a case in which the shape of the target laminate for a secondary battery is a circular shape, an elliptical shape, or the like, the colored region may have a curved shape.

Note that the arrangement pitch of colored regions (minimum distance between two adjacent colored regions in plan view) can be set as appropriate in accordance with the positive electrode size and so forth.

### «Step (1-4)»

In the step (1-4), the colored region that was provided on the first separator web in the step (1-3) is irradiated with a laser so as to cut the negative electrode laminate of the affixed body. Heat that is generated through absorption of the laser in the colored region causes melt-deformation of a first separator (particularly an end section thereof) originating from the first separator web on which the colored region was provided, and can thereby cause the formation of a raised section that covers a side surface of a positive electrode disposed on the first separator.

Although no specific limitations are placed on the distance (minimum distance) between a position on the first separator web that is irradiated with the laser (laser irradiation position) and a positive electrode in a direction orthogonal to the stacking direction (corresponding to distance a from a laser irradiation position L to a side surface of a positive electrode 40 in FIG. 4), this distance is preferably 300 µm or more, and more preferably 350 µm or more, and is preferably 900 µm or less, preferably 750 µm or less, and more preferably 600 µm or less. When the distance from the laser irradiation position to the positive electrode is 300 µm or more, this facilitates arrangement of colored regions and cutting by the laser and enables adequate formation of a raised section covering the positive electrode side surface. On the other hand, when the distance from the laser irradiation position to the positive electrode is 900 µm or less, a raised section covering the positive electrode side surface can be formed well through cutting and melting of the first separator web by laser irradiation. Moreover, when the distance from the laser irradiation position to the positive electrode is within any of the ranges set forth above, it is possible to sufficiently ensure safety of a secondary battery while also adopting a large positive electrode size (plan view area) so as to further improve charging capacity.

No specific limitations are placed on the type of laser that is used. For example, a fiber laser, a YAG laser, or a CO₂ laser can be used.

### <Second aspect>

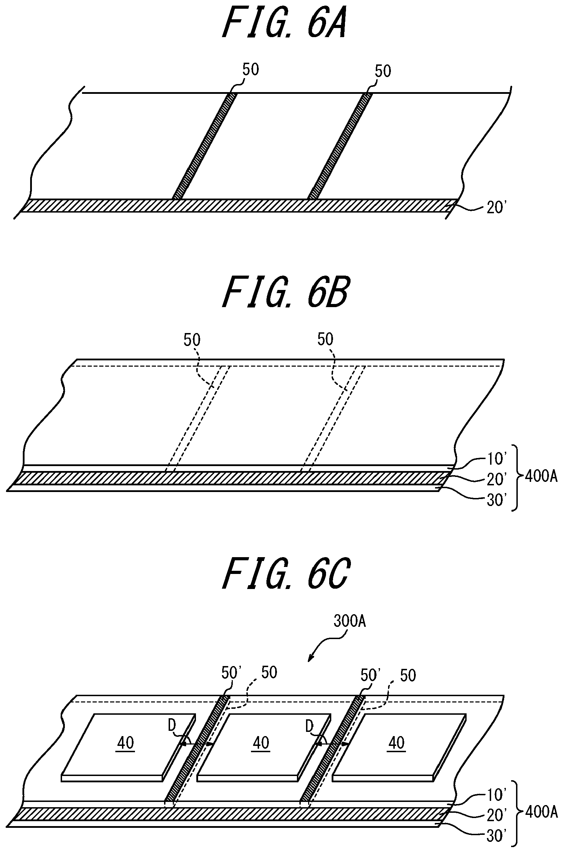

A second aspect of the presently disclosed production method is described below with reference to FIGS. 6A to 6C. The second aspect of the presently disclosed production method includes at least:
a step (2-1) of applying a laser absorbing dye, at intervals, to one surface of an elongated negative electrode web so as to provide a plurality of colored regions;
a step (2-2) of affixing an elongated first separator web to the surface of the negative electrode web at which the colored regions have been provided in the step (2-1) and affixing an elongated second separator web to a surface of the negative electrode web at an opposite side thereof to the first separator web so as to obtain an elongated negative electrode laminate;
a step (2-3) of affixing a plurality of positive electrodes, at intervals, to a surface of the first separator web of the negative electrode laminate obtained in the step (2-2) at an opposite side thereof to the negative electrode web such that the plurality of positive electrodes do not overlap with regions that are opposite the colored regions with the first separator web in-between, and thereby obtaining an elongated affixed body; and
a step (2-4) of irradiating the regions of the first separator web of the affixed body obtained in the step (2-3) that are opposite the colored regions with a laser so as to cut the negative electrode laminate of the affixed body and cause melt-deformation of a first separator to form a raised section.

### «Step (2-1)»

In the step (2-1), a laser absorbing dye is supplied to one surface of an elongated negative electrode web so as to form a plurality of colored regions at the surface of the negative electrode web.

The laser absorbing dye and the supply method thereof can be any of those previously described in the "first aspect". Note that in a situation in which laser irradiation is performed without providing a colored region formed of a laser absorbing dye, this causes excessive contraction of a first separator and/or second separator formed through cutting and loss of second battery safety. It also becomes difficult to control the height of a raised section.

The shape of the colored regions can be set as appropriate in accordance with the plan view shape of the target laminate for a secondary battery. For example, in the example illustrated in FIG. 6A, colored regions 50 are formed with a linear shape (rectangular shape) in a width direction of a negative electrode web 20' (direction orthogonal to a longitudinal direction). Moreover, the colored regions 50 extend continuously from one end of the negative electrode web 20' in the width direction to the other end of the negative electrode web 20' in the width direction. As previously described, the shape of the colored regions is not limited to a linear shape such as illustrated in FIG. 6A. For example, in a case in which the shape of the target laminate for a secondary battery is a circular shape, an elliptical shape, or the like, the colored regions may have a curved shape.

Note that the arrangement pitch of the colored regions (minimum distance between two adjacent colored regions in plan view) can be set as appropriate in accordance with the positive electrode size and so forth.

### «Step (2-2)»

In the step (2-2), a negative electrode laminate having the negative electrode web provided with the colored regions in the step (2-1) sandwiched between an elongated first separator web and an elongated second separator web is obtained. No specific limitations are placed on the method by which the negative electrode web is affixed to the first separator web and the second separator web. For example, a method using an adhesive material that was previously described in the "first aspect" can be adopted.

One example of the negative electrode laminate obtained in the step (2-2) is illustrated in FIG. 6B as a negative electrode laminate 400A. In FIG. 6B, a first separator web 10' is arranged at a surface at a side where colored regions 50 are provided on a negative electrode web 20'.

### «Step (2-3)»

In the step (2-3), single-sheet positive electrodes are affixed in plurality, at intervals, to a surface at the first separator web side of the negative electrode laminate obtained in the step (2-2) so as to obtain an elongated affixed body. Note that the positive electrodes are affixed such as to not overlap with regions that are opposite the colored regions with the first separator web in-between. No specific limitations are placed on the method by which the negative electrode laminate and the positive electrodes are affixed. For example, a method using an adhesive material that was previously described in the "first aspect" can be adopted.

FIG. 6C illustrates an affixed body 300A that is one example of the affixed body. The affixed body 300A includes a negative electrode laminate 400A and a plurality of positive electrodes 40. The negative electrode laminate 400A includes a first separator web 10', a negative electrode web 20', and a second separator web 30' stacked in stated order. The plurality of positive electrodes 40 are arranged on the first separator web 10' of the negative electrode laminate 400A at specific intervals D in a longitudinal direction of the affixed body 300A. The positive electrodes 40 are arranged such as to not overlap with regions (opposite regions 50') that are opposite the colored regions 50 on the negative electrode web 20' with the first separator web 10' in-between.

Note that suitable ranges for the intervals of the positive electrodes arranged in plurality on the first separator web of the negative electrode laminate (minimum distance between two adjacent positive electrodes in plan view; corresponding to D in FIG. 6C) are the same as previously described in the "first aspect".

### «Step (2-4)»

In the step (2-4), the first separator web of the affixed body obtained in the step (2-3) is irradiated with a laser at the regions that are opposite the colored regions on the negative electrode laminate with the first separator web in-between. Heat that is generated through absorption of the laser in the colored regions causes melt-deformation of a first separator (particularly an end section thereof) originating from the first separator web, and can thereby cause the formation of a raised section that covers a side surface of a positive electrode disposed on the first separator.

The type of laser is not specifically limited, and any of those previously described in the "first aspect" can be used.

Moreover, suitable ranges for the distance (minimum distance) between a position on the first separator web that is irradiated with the laser and a positive electrode are the same as previously described for the "first aspect".

### <Third aspect>

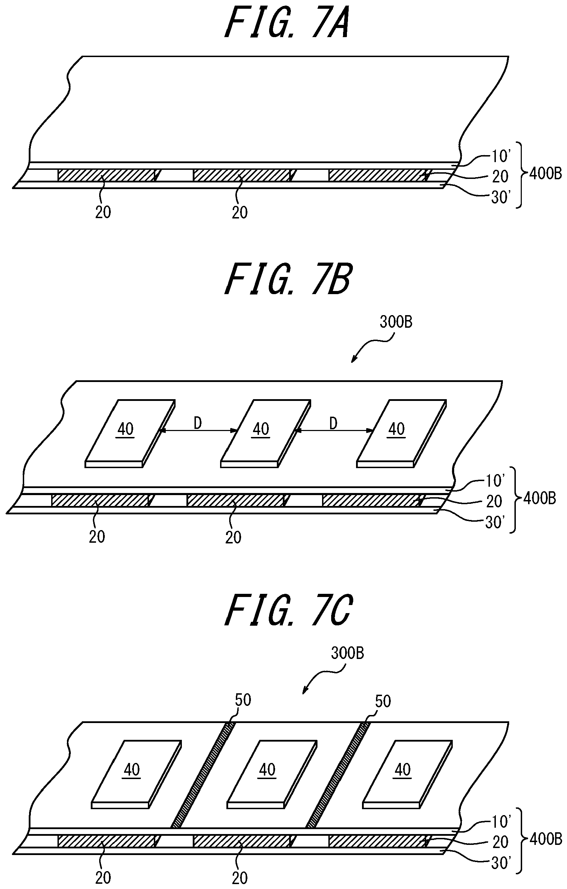

A third aspect of the presently disclosed production method is described below with reference to FIGS. 7A to 7C. The third aspect of the presently disclosed production method includes at least:
a step (3-1) of sandwiching a plurality of negative electrodes, at intervals, between an elongated first separator web and an elongated second separator web so as to obtain a negative electrode laminate;
a step (3-2) of affixing a plurality of positive electrodes, at intervals, to a surface of the first separator web of the negative electrode laminate obtained in the step (3-1) at an opposite side thereof to the negative electrodes such that the plurality of positive electrodes are opposite the plurality of negative electrodes with the first separator web in-between, and thereby obtaining an elongated affixed body;
a step (3-3) of supplying a laser absorbing dye to an interval of the plurality of positive electrodes of the affixed body obtained in the step (3-2) so as to provide a colored region at a surface of the first separator web; and
a step (3-4) of irradiating the colored region of the first separator web provided in the step (3-3) with a laser so as to cut the negative electrode laminate of the affixed body and cause melt-deformation of a first separator to form a raised section.

### «Step (3-1)»

In the step (3-1), a negative electrode laminate having single-sheet negative electrodes sandwiched in plurality between an elongated first separator web and an elongated second separator web is obtained. No specific limitations are placed on the method by which the negative electrodes are affixed to the first separator web and the second separator web. For example, a method using an adhesive material that was previously described in the "first aspect" can be adopted.

FIG. 7A illustrates a negative electrode laminate 400B that is one example of the negative electrode laminate. The negative electrode laminate 400B includes a first separator web 10', a plurality of negative electrodes 20, and a second separator web 30' stacked in stated order. The plurality of negative electrodes 20 are sandwiched between the first separator web 10' and the second separator web 30' and are arranged at intervals in a longitudinal direction of the negative electrode laminate 400B.

Note that the intervals between the negative electrodes that are present between the first separator web and the second separator web (minimum distance between two adjacent negative electrodes in plan view) can be set as appropriate in accordance with the intervals between positive electrodes arranged in plurality in the subsequently described step (3-2) and so forth.

### «Step (3-2)»

In the step (3-2), single-sheet positive electrodes are affixed in plurality, at specific intervals, to a surface at the first separator web side of the negative electrode laminate obtained in the step (3-1) so as to obtain an elongated affixed body. Note that the plurality of positive electrodes are arranged such as to be opposite the plurality of negative electrodes with the first separator web in-between. No specific limitations are placed on the method by which the negative electrode laminate and the positive electrodes are affixed. For example, a method using an adhesive material that was previously described in the "first aspect" can be adopted.

FIG. 7B illustrates an affixed body 300B that is one example of the affixed body. The affixed body 300B includes a negative electrode laminate 400B and a plurality of positive electrodes 40. The plurality of positive electrodes 40 are arranged on a first separator web 10' of the negative electrode laminate 400B at specific intervals D in a longitudinal direction of the affixed body 300B. The plurality of positive electrodes 40 are arranged such as to be opposite the plurality of negative electrodes 20 with the first separator web 10' in-between.

Note that suitable ranges for the intervals between the positive electrodes arranged in plurality on the first separator web of the negative electrode laminate (minimum distance between two adjacent positive electrodes in plan view; corresponding to D in FIG. 7B) are the same as previously described in the "first aspect".

### «Step (3-3)»

In the step (3-3), a laser absorbing dye is supplied between the plurality of positive electrodes of the affixed body obtained in the step (3-2) so as to form a colored region at the first separator web surface of the affixed body.

The laser absorbing dye and the method by which the laser absorbing dye is supplied can be any of those that were previously described in the "first aspect". Note that in a situation in which laser irradiation is performed without providing a colored region formed of a laser absorbing dye, this causes excessive contraction of a first separator and/or second separator formed through cutting and loss of second battery safety. It also becomes difficult to control the height of a raised section.

The shape of the colored region can be set as appropriate in accordance with the plan view shape of the target laminate for a secondary battery. For example, in the example illustrated in FIG. 7C, a colored region 50 provided between two adjacent positive electrodes 40 is formed with a linear shape (rectangular shape) in a width direction of an affixed body 300B (direction orthogonal to a longitudinal direction). Moreover, the colored region 50 extends continuously from one end of the affixed body 300B in the width direction to the other end of the affixed body 300B in the width direction. As previously described, the shape of the colored region is not limited to a linear shape such as illustrated in FIG. 7C. For example, in a case in which the shape of the target laminate for a secondary battery is a circular shape, an elliptical shape, or the like, the colored region may have a curved shape.

Note that the arrangement pitch of colored regions (minimum distance between two adjacent colored regions in plan view) can be set as appropriate in accordance with the positive electrode size and so forth.

In the step (3-3), it is preferable that a colored region is provided not only at the first separator web surface of the affixed body, but also at the second separator web surface (particularly a surface of the second separator web at an opposite side thereof to the negative electrodes). By also providing a colored region at the second separator web surface in this manner, it is possible to inhibit excessive contraction of a second separator during cutting by a laser and to sufficiently ensure safety of a secondary battery.

The colored region at the second separator web surface is preferably formed such as to overlap in a direction orthogonal to the stacking direction of the affixed body with the colored region at the first separator web surface in plan view of the affixed body.

### «Step (3-4)»

In the step (3-4), the colored region of the first separator web (and the optionally provided colored region of the second separator web) that were provided in the step (3-3) are irradiated with a laser so as to cut the negative electrode laminate of the affixed body. Heat that is generated through absorption of the laser in the colored region causes melt-deformation of a first separator (particularly an end section thereof) originating from the first separator web where the colored region was provided, and can thereby cause the formation of a raised section that covers a side surface of a positive electrode disposed on the first separator.

The type of laser is not specifically limited and can be any of those that were previously described in the "first aspect".

Moreover, suitable ranges for the distance (minimum distance) between a position on the first separator web that is irradiated with the laser and a positive electrode are the same as previously described in the "first aspect".

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the presence or absence of covering of a positive electrode side surface by a raised section, various dimensions of a laminate for a secondary battery, the ratio of height of a raised section relative to height of a positive electrode, and the safety and charging capacity of a secondary battery.

### <Presence or absence of covering of positive electrode side surface by raised section>

A location where an obtained laminate for a secondary battery had been cut by a laser or the like was observed using a 3D shape measuring instrument (VR-3200 produced by Keyence Corporation). A judgment of "covering" was made in a case in which a raised section was in contact with a positive electrode side surface, whereas a judgment of "not covering" was made in a case in which a raised section was not in contact with a positive electrode side surface.

### <Various dimensions of laminate for secondary battery>

An obtained laminate for a secondary battery was observed using a 3D shape measuring instrument (VR-3200 produced by Keyence Corporation), and the height (corresponding to b in FIG. 4) of a raised section from a reference surface was measured. In addition, the height (corresponding to c in FIG. 4) of a positive electrode from the reference surface was measured using a contact-type film-thickness meter (Thickness Gauge produced by Mitutoyo Corporation). Note that each value recorded in Table 1 is an average value of heights at 5 arbitrary points.

The distance (corresponding to e in FIG. 4) from a laser irradiation position to an inner side surface (side surface close to a positive electrode) of a raised section resulting from cutting by a laser was also measured through observation using a 3D shape measurement instrument (VR-3200 produced by Keyence Corporation). Note that determination of the laser irradiation position after cutting was performed based on the distance (corresponding to a in FIG. 4) from the laser irradiation position to a positive electrode in a direction orthogonal to a stacking direction, which was determined in advance prior to cutting.

### <Ratio of height of raised section relative to height of positive electrode>

Average values of heights at 5 arbitrary locations were calculated for the height of a raised section from a reference surface and the height of a positive electrode from the reference surface, which were measured as described above, and then these average values were used to calculate a ratio (%) of the height of the raised section relative to the height (100%) of the positive electrode.

### <Safety>

A produced secondary battery was subjected to a charge/discharge test. Specifically, the charge/discharge test was performed at a 3 mA constant current with a charging end voltage of 4.2 V and a discharging end voltage of 2.5 V. Note that after the initial charge, a hole was opened in a laminate part of the secondary battery, gas was allowed to escape, the section where a hole had been opened was sealed under vacuum, and then charging and discharging were performed. Thereafter, charging was performed to 4.3 V by a 0.1C constant-current method.

This charge/discharge test was performed for 10 cells, in total, and an evaluation was made by the following standard according to the number of cells for which an abnormality (heat generation, expansion, failure to reach end voltage, etc.) was observed.
A: Abnormality observed in none of the cells
B: Abnormality observed in not fewer than 1 and not more than 5 cells
C: Abnormality observed in not fewer than 6 and not more than 10 cells
D: Charge/discharge test not possible (judged to be dangerous due to the possibility of thermal runaway reaction caused by short circuiting of electrodes because a location where positive and negative electrodes are not separated by a first separator is present)

### <Charging capacity>

The charging capacity of a produced lithium ion secondary battery was measured. Specifically, a charge/discharge test was performed in the same manner as in evaluation of "safety" described above, the charging capacity was calculated through an integrated current value in the charging process, and the charging capacity was evaluated by the following standard.
A: Charging capacity of 210 mAh or more
B: Charging capacity of not less than 200 mAh and less than 210 mAh
C: Charging capacity of less than 200 mAh
D: Charge/discharge test not possible (judged to be dangerous due to the possibility of thermal runaway caused by short circuiting of electrodes because a location where positive and negative electrodes are not separated by a first separator is present)

### (Example 1)

### <Production of negative electrode web>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. At the point at which the polymerization conversion rate reached 96%, the reaction was quenched by cooling to obtain a mixture containing a binder for a negative electrode mixed material layer (SBR). The mixture containing the binder for a negative electrode mixed material layer was adjusted to pH 8 through addition of 5% sodium hydroxide aqueous solution and was then subjected to thermal-vacuum distillation to remove unreacted monomer. Thereafter, cooling was performed to 30°C or lower to obtain a water dispersion containing the target binder for a negative electrode mixed material layer.

Next, 100 parts of artificial graphite (volume-average particle diameter: 15.6 µm) as a negative electrode active material, 1 part in terms of solid content of a 2% aqueous solution of carboxymethyl cellulose sodium salt (produced by Nippon Paper Industries Co., Ltd.; product name: MAC350HC) as a viscosity modifier, and deionized water were mixed, were adjusted to a solid content concentration of 68%, and were then further mixed at 25°C for 60 minutes. The solid content concentration was further adjusted to 62% with deionized water and then a further 15 minutes of mixing was performed at 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to a defoaming process under reduced pressure to yield a slurry composition for a secondary battery negative electrode having good fluidity.

The obtained slurry composition for a secondary battery negative electrode was applied onto both surfaces of copper foil (current collector) of 20 µm in thickness using a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode web having a negative electrode mixed material layer thickness of 80 µm.

### <Preparation of separator web>

A microporous membrane separator (thickness 12 µm) made of polyethylene was prepared as a first separator web and a second separator web.

### <Production of positive electrode>

A slurry composition for a secondary battery positive electrode was obtained by mixing 100 parts of lithium nickel cobalt manganese oxide (LiNi_{0.5}Co_{0.2}Mn_{0.3}O₂) as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and mixing these materials using a planetary mixer.

The obtained slurry composition for a secondary battery positive electrode was applied onto both surfaces of aluminum foil (current collector) of 20 µm in thickness using a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a positive electrode web. The obtained positive electrode web was rolled by a roll press to obtain a post-pressing positive electrode web including positive electrode mixed material layers.

The post-pressing positive electrode web was cut into a single-sheet form by a fiber laser to obtain a positive electrode.

### <Production of adhesive material>

First, in core portion formation, 88 parts of styrene as an aromatic vinyl monomer, 6 parts of n-butyl acrylate as a (meth)acrylic acid ester monomer, 5 parts of methacrylic acid as an acid group-containing monomer, 1 part of ethylene glycol dimethacrylate as a cross-linkable monomer, 1 part of sodium dodecylbenzenesulfonate as an emulsifier, 150 parts of deionized water, and 0.5 parts of potassium persulfate as a polymerization initiator were loaded into a 5 MPa pressure-resistant vessel equipped with a stirrer, were sufficiently stirred, and were then heated to 60°C to initiate polymerization. At the point at which the polymerization conversion rate reached 96%, 80.7 parts of n-butyl acrylate as a (meth)acrylic acid ester monomer, 1 part of methacrylic acid, 18 parts of styrene as an aromatic vinyl monomer, and 0.3 parts of allyl methacrylate as a cross-linkable monomer were continuously added for shell portion formation, and polymerization was continued under heating to 70°C. The reaction was quenched by cooling at the point at which the polymerization conversion rate reached 96% to thereby produce a water dispersion containing a particulate polymer.

### [Production of other binder]

A reactor including a stirrer was supplied with 70 parts of deionized water, 0.15 parts of sodium lauryl sulfate (produced by Kao Corporation; product name: EMAL 2F) as an emulsifier, and 0.5 parts of ammonium persulfate, the gas phase was purged with nitrogen gas, and the temperature was raised to 60°C.

Meanwhile, a monomer mixture was obtained in a separate vessel by mixing 50 parts of deionized water, 0.5 parts of sodium dodecylbenzenesulfonate as an emulsifier, and 94 parts of n-butyl acrylate, 2 parts of acrylonitrile, 2 parts of methacrylic acid, 1 part of N-hydroxymethylacrylamide, and 1 part of allyl glycidyl ether as polymerizable monomers. The monomer mixture was continuously added into the above-described reactor over 4 hours so as to carry out polymerization. The reaction was carried out at 60°C during the addition. Once the addition was complete, a further 3 hours of stirring was performed at 70°C so as to complete the reaction, and thereby produce a water dispersion containing an acrylic polymer (other binder).

### [Mixing]

Mixing of 87 parts in terms of solid content of the water dispersion of the particulate polymer described above and 13 parts in terms of solid content of the water dispersion of the acrylic polymer described above was performed inside a stirring vessel. Next, 87 parts of propylene glycol as a polyhydric alcohol compound was added to the resultant mixture, and deionized water was further added to yield a composition for adhesion having a solid content concentration of 15%.

### <Production of laminate for secondary battery>

Separator webs (first separator web and second separator web) each having the adhesive material applied at one surface thereof were affixed to both surfaces of a negative electrode web by a roll-to-roll method so as to obtain a negative electrode laminate having separator webs affixed to both surfaces of the negative electrode web via the adhesive material (step (1-1)). A plurality of single-sheet positive electrodes each having the adhesive material applied at one surface were then affixed to the first separator web surface of the obtained negative electrode laminate by a roll-to-roll method so as to obtain an affixed body (step (1-2)). Note that the interval between positive electrodes was set as 700 µm. Next, an oil-based dye (oil-based marker; black) serving as a laser absorbing dye was used to provide colored regions that extended in a linear shape from one end of the affixed body in a width direction to the other end of the affixed body in the width direction in the intervals between the positive electrodes of the affixed body (step (1-3)). The colored regions were then irradiated with a fiber laser so as to cut the negative electrode laminate part (part where the first separator web, negative electrode web, and second separator web were stacked) of the affixed body and thereby obtain a laminate for a secondary battery (step (1-4)). Note that the distance between a position on the first separator web that was irradiated with the laser (laser irradiation position) and a positive electrode was set as 350 µm. The obtained laminate for a secondary battery was used to measure and evaluate the presence or absence of covering of a positive electrode side surface by a raised section, various dimensions of the laminate for a secondary battery, and the ratio of height of a raised section relative to height of a positive electrode. The results are shown in Table 1.

### <Production of secondary battery>

Five laminates for a secondary battery such as described above were stacked in a stacking direction so as to obtain a stack. The stack was sandwiched between laminate films, electrolyte solution (solvent: ethylene carbonate/diethyl carbonate/ethyl methyl carbonate = 3/5/2 (volume ratio); electrolyte: LiPF₆ of 1 M in concentration) was injected, and then sealing was performed under vacuum so as to produce a stacked laminate-type secondary battery. Safety and charging capacity were evaluated for the obtained secondary battery. The results are shown in Table 1.

### (Example 2)

A negative electrode web, a positive electrode, an adhesive material, a laminate for a secondary battery, and a secondary battery were prepared and various measurements and evaluations were performed in the same way as in Example 1 with the exception that a separator web obtained as described below was used as the first separator web and the second separator web, the interval between positive electrodes was set as 1,200 µm, and the distance between a laser irradiation position and a positive electrode was set as 600 µm. The results are shown in Table 1.

Note that the first separator web was arranged such that a heat-resistant layer side thereof was in contact with the positive electrodes, and the second separator web was arranged such that a heat-resistant layer side thereof was in contact with the negative electrode web.

### <Preparation of separator web>

A reactor including a stirrer was supplied with 70 parts of deionized water, 0.15 parts of sodium lauryl sulfate (produced by Kao Corporation; product name: EMAL 2F) as an emulsifier, and 0.5 parts of ammonium persulfate as a polymerization initiator, the gas phase was purged with nitrogen gas, and the temperature was raised to 60°C.

Meanwhile, 50 parts of deionized water, 0.5 parts of sodium dodecylbenzenesulfonate as an emulsifier, and 94 parts of butyl acrylate, 2 parts of acrylonitrile, 2 parts of methacrylic acid, 1 part of N-hydroxymethylacrylamide, and 1 part of allyl glycidyl ether as polymerizable monomers were supplied into a separate vessel and were mixed to obtain a monomer mixture. The monomer mixture was continuously added into the above-described reactor over 4 hours to carry out polymerization. During addition of the monomer mixture, the polymerization reaction was continued at a temperature of 60°C. After the addition was complete, a further 3 hours of stirring was performed at a temperature of 70°C so as to complete the polymerization reaction and thereby produce a water dispersion containing an acrylic polymer as a binder for a heat-resistant layer.

A slurry composition for a heat-resistant layer was then produced by mixing 100 parts in terms of solid content of alumina (produced by Sumitomo Chemical Co., Ltd.; product name: AKP3000) as heat-resistant fine particles, 10 parts of the binder for a heat-resistant layer obtained as described above, 5 parts of carboxymethyl cellulose sodium salt (produced by Nippon Paper Industries Co., Ltd.; product name: MAC350HC) as a thickener, and 1 part of polyacrylic acid as a dispersant using a ball mill.

The obtained slurry composition for a heat-resistant layer was applied onto a microporous membrane separator (thickness 12 µm) made of polyethylene and was dried at a temperature of 50°C for 3 minutes to obtain a separator web having a heat-resistant layer at one surface of a separator substrate.

### (Example 3)

A negative electrode web, a positive electrode, an adhesive material, a separator web, a laminate for a secondary battery, and a secondary battery were prepared and various measurements and evaluations were performed in the same way as in Example 1 with the exception that a purple oil-based dye (oil-based marker) was used instead of the black oil-based dye (oil-based marker) as a laser absorbing dye, the interval between positive electrodes was set as 1,800 µm, and the distance between a laser irradiation position and a positive electrode was set as 900 µm. The results are shown in Table 1.

### (Example 4)

A negative electrode web, a positive electrode, an adhesive material, a separator web, and a secondary battery were prepared and various measurements and evaluations were performed in the same way as in Example 2 with the exception that a laminate for a secondary battery was produced as described below. The results are shown in Table 1.

### <Production of laminate for secondary battery>

At one surface of a negative electrode web, an oil-based dye (oil-based marker; black) serving as a laser absorbing dye was used to provide a plurality of colored regions extending in a linear shape from one end of the negative electrode web in a width direction to the other end of the negative electrode web in the width direction at a specific arrangement pitch (step (2-1)). Separator webs (first separator web and second separator web) having the above-described adhesive material applied at one surface were then affixed to both surfaces of the negative electrode web by a roll-to-roll method before the oil-based dye had dried so as to produce a negative electrode laminate in which the oil-based dye had soaked into the first separator web (step (2-2)). A plurality of single-sheet positive electrodes having the adhesive material applied at one surface were affixed to the first separator web surface of the obtained negative electrode laminate by a roll-to-roll method so as to obtain an affixed body (step (2-3)). Note that the interval between positive electrodes was set as 800 µm. Moreover, this affixing was performed (as illustrated in FIG. 6C) such that the positive electrodes did not overlap with regions that were opposite the colored regions with the first separator web in-between. Note that the distance between a laser irradiation position and a positive electrode was set as 400 µm. The regions of the first separator web opposite the colored regions were then irradiated with a fiber laser so as to cut a negative electrode laminate part (part where the first separator web, negative electrode web, and second separator web were stacked) of the affixed body and thereby obtain a laminate for a secondary battery (step (2-4)).

### (Comparative Example 1)

A negative electrode web, a positive electrode, an adhesive material, a separator web, a laminate for a secondary battery, and a secondary battery were prepared and various measurements and evaluations were performed in the same way as in Example 1 with the exception that colored regions were not provided, the interval between positive electrodes was set as 3,200 µm, and the distance between a laser irradiation position and a positive electrode was set as 1,600 µm. The results are shown in Table 1.

### (Comparative Example 2)

A negative electrode web, a positive electrode, an adhesive material, a separator web, a laminate for a secondary battery, and a secondary battery were prepared and various measurements and evaluations were performed in the same way as in Example 2 with the exception that colored regions were not provided, cutting of the negative electrode laminate part of the affixed body was performed using a cutting blade made of metal, the interval between positive electrodes was set as 700 µm, and the distance between a position on the first separator web where the cutting blade was applied and a positive electrode was set as 350 µm. The results are shown in Table 1.

### (Comparative Example 3)

A negative electrode web, a positive electrode, an adhesive material, a separator web, a laminate for a secondary battery, and a secondary battery were prepared and various measurements and evaluations were performed in the same way as in Example 1 with the exception that the interval between positive electrodes was set as 3,000 µm and the distance between a laser irradiation position and a positive electrode was set as 1,500 µm. The results are shown in Table 1.

### (Comparative Example 4)

A negative electrode web, a positive electrode, an adhesive material, a separator web, a laminate for a secondary battery, and a secondary battery were prepared and various measurements and evaluations were performed in the same way as in Example 2 with the exception that the interval between positive electrodes was set as 3,000 µm and the distance between a laser irradiation position and a positive electrode was set as 1,500 µm. The results are shown in Table 1.

### (Comparative Example 5)

A negative electrode web, a positive electrode, an adhesive material, a separator web, a laminate for a secondary battery, and a secondary battery were prepared and various measurements and evaluations were performed in the same way as in Example 1 with the exception that colored regions were not provided. The results are shown in Table 1. Note that in Comparative Example 5 and the subsequently described Comparative Example 6, the first separator contracted such that it had a smaller size than the positive electrode, and thus a raised section was not formed. Therefore, the distance from a laser cutting position to an edge of the first separator after cutting by the laser was measured instead of measuring the distance from a laser irradiation position to an inner side surface (side surface close to a positive electrode) of a raised section resulting from cutting by the laser.

### (Comparative Example 6)

A negative electrode web, a positive electrode, an adhesive material, a separator web, a laminate for a secondary battery, and a secondary battery were prepared and various measurements and evaluations were performed in the same way as in Example 2 with the exception that colored regions were not provided, the interval between positive electrodes was set as 700 µm, and the distance between a laser irradiation position and a positive electrode was set as 350 µm. The results are shown in Table 1.

### (Comparative Example 7)

A negative electrode web, a positive electrode, an adhesive material, a separator web, a laminate for a secondary battery, and a secondary battery were prepared and various measurements and evaluations were performed in the same way as in Example 1 with the exception that the interval between positive electrodes was set as 600 µm and the distance between a laser irradiation position and a positive electrode was set as 300 µm. The results are shown in Table 1.

**Table 1**

| | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| Laser absorbing dye | Black | Black | Purple | Black | - | - | Black | Black | - | - | Black |
| Heat-resistant layer of separator | No | Yes | No | Yes | No | Yes | No | Yes | No | Yes | No |
| Cutting method | Laser | Laser | Laser | Laser | Laser | Cutting blade | Laser | Laser | Laser | Laser | Laser |
| Distance (a) between laser irradiation position (cutting position) and positive electrode [µm] | 350 | 600 | 900 | 400 | 1600 | 350 | 1500 | 1500 | 350 | 350 | 300 |
| Height (b) of raised section [µm] | 52 | 97 | 127 | 60 | 170 | 8 | 52 | 97 | - | - | 17 |
| Height (c) of positive electrode [µm] | 120 | 120 | 120 | 120 | 120 | 120 | 120 | 120 | 120 | 120 | 120 |
| Distance (d) between positive electrode and second separator [µm] | 335 | 585 | 885 | 385 | 1585 | 348 | 1485 | 1485 | 335 | 335 | 285 |
| Distance (e) between laser irradiation position and inner side surface of raised section, etc. [µm] | 350 | 600 | 900 | 400 | 1600 | 10 | 350 | 600 | 1712 | 1500 | 300 |
| Ratio of height of raised section relative to height of positive electrode [%] | 43 | 81 | 106 | 50 | 142 | 7 | 43 | 81 | - | - | 14 |
| Covering of positive electrode side surface by raised section | Yes | Yes | Yes | Yes | Yes | No | No | No | No | No | Yes |
| Safety | A | A | A | A | A | B | A | A | D | D | B |
| Charging capacity | A | A | B | A | C | A | C | C | D | D | A |

It can be seen from Table 1 that safety and charging capacity of a secondary battery could be sufficiently ensured in Examples 1 to 4.

In contrast, charging capacity of a secondary battery decreased in Comparative Example 1 in which the ratio of height of a raised section relative to height of a positive electrode exceeded a specific upper limit.

Moreover, safety of a secondary battery could not be improved to the excepted level in Comparative Example 2 in which a raised section did not cover a positive electrode side surface and in which a ratio of height of a raised section relative to height of a positive electrode fell below a specific lower limit.

Furthermore, a positive electrode side surface was not covered by a raised section having a ratio relative to height of the positive electrode that was within a specific range in Comparative Examples 3 and 4. In these Comparative Examples 3 and 4, the size of the positive electrode was excessively small relative to the size of the first separator, and thus, even though safety could be ensured, charging capacity decreased.

In Comparative Examples 5 and 6, the first separator contracted to a smaller size than the positive electrode as previously described, and thus thermal runaway due to short circuiting of electrodes was a concern. Therefore, safety and charging capacity were not evaluated (i.e., a D evaluation was given for each thereof).

Furthermore, safety of a secondary battery could not be improved to the excepted level in Comparative Example 7 in which a ratio of height of a raised section relative to height of a positive electrode fell below a specific lower limit.

### INDUSTRIAL APPLICABILITY

According to the present disclosure, it is possible to obtain a laminate for a secondary battery with which it is possible to produce a secondary battery in which both safety and charging capacity are excellent.

Moreover, according to the present disclosure, it is possible to obtain a secondary battery in which both safety and charging capacity are excellent.

### REFERENCE SIGNS LIST

10 first separator
10' first separator web
10a separator substrate
10b heat-resistant layer
10c heat-resistant fine particles
11, 11', 12, 12' raised section
20 negative electrode
20' negative electrode web
21 negative electrode current collector
22, 23 negative electrode mixed material layer
30 second separator
30' second separator web
40 positive electrode
41 positive electrode current collector
42, 43 positive electrode mixed material layer
50 colored region
50' opposite region
100, 100A laminate for secondary battery
200 stack
300, 300A, 300B affixed body
400, 400A, 400B negative electrode laminate
a distance between laser irradiation position L and positive electrode 40
b height of raised section 11
c height of positive electrode 40
d distance between side surface of positive electrode 40 and edge of second separator 30
e distance between laser irradiation position L and inner side surface of raised section 11
S reference surface
D interval
L laser irradiation position

## Claims

1. A laminate for a secondary battery comprising: a negative electrode; a first separator affixed to one surface of the negative electrode; a positive electrode affixed to a surface of the first separator at an opposite side of the first separator to the negative electrode; and a second separator affixed to another surface of the negative electrode, wherein
at least part of a side surface of the positive electrode along a stacking direction is covered by a raised section where the first separator is deformed, and
when a surface where the first separator and the positive electrode are in contact is taken as a reference surface, a stacking direction height of the raised section from the reference surface is not less than 15% and not more than 130% of a stacking direction height of the positive electrode from the reference surface.

2. The laminate for a secondary battery according to claim 1, wherein a distance between the side surface of the positive electrode that is covered by the raised section and an edge of the second separator in a direction orthogonal to the stacking direction is not less than 285 µm and not more than 735 µm.

3. The laminate for a secondary battery according to claim 1 or 2, wherein the first separator includes a separator substrate and a heat-resistant layer formed on at least one surface of the separator substrate.

4. A secondary battery comprising the laminate for a secondary battery according to any one of claims 1 to 3.

5. A method of producing a laminate for a secondary battery that is a method of producing the laminate for a secondary battery according to any one of claims 1 to 3, comprising:
a step of affixing an elongated first separator web to one surface of an elongated negative electrode web and affixing an elongated second separator web to a surface of the negative electrode web at an opposite side of the negative electrode web to the first separator web so as to obtain an elongated negative electrode laminate;
a step of affixing a plurality of the positive electrode, at intervals, to a surface of the first separator web of the negative electrode laminate at an opposite side of the first separator web to the negative electrode web so as to obtain an elongated affixed body;
a step of supplying a laser absorbing dye to an interval of the plurality of positive electrodes of the affixed body so as to provide a colored region at a surface of the first separator web of the affixed body; and
a step of irradiating the colored region of the first separator web with a laser so as to cut the negative electrode laminate of the affixed body and cause melt-deformation of the first separator to form the raised section.

6. A method of producing a laminate for a secondary battery that is a method of producing the laminate for a secondary battery according to any one of claims 1 to 3, comprising:
a step of supplying a laser absorbing dye, at intervals, to one surface of an elongated negative electrode web so as to provide a plurality of colored regions;
a step of affixing an elongated first separator web to the surface of the negative electrode web at which the colored regions are provided and affixing an elongated second separator web to a surface of the negative electrode web at an opposite side of the negative electrode web to the first separator web so as to obtain an elongated negative electrode laminate;
a step of affixing a plurality of the positive electrode, at intervals, to a surface of the first separator web of the negative electrode laminate at an opposite side of the first separator web to the negative electrode web such that the plurality of positive electrodes do not overlap with regions that are opposite the colored regions with the first separator web in-between, and thereby obtaining an elongated affixed body; and
a step of irradiating the regions of the first separator web of the affixed body that are opposite the colored regions with a laser so as to cut the negative electrode laminate of the affixed body and cause melt-deformation of the first separator to form the raised section.

7. A method of producing a laminate for a secondary battery that is a method of producing the laminate for a secondary battery according to any one of claims 1 to 3, comprising:
a step of sandwiching a plurality of the negative electrode, at intervals, between an elongated first separator web and an elongated second separator web so as to obtain a negative electrode laminate;
a step of affixing a plurality of the positive electrode, at intervals, to a surface of the first separator web of the negative electrode laminate at an opposite side of the first separator web to the negative electrode such that the plurality of positive electrodes are opposite the plurality of negative electrodes with the first separator web in-between, and thereby obtaining an elongated affixed body;
a step of supplying a laser absorbing dye to an interval of the plurality of positive electrodes of the affixed body so as to provide a colored region at a surface of the first separator web; and
a step of irradiating the colored region of the first separator web with a laser so as to cut the negative electrode laminate of the affixed body and cause melt-deformation of the first separator to form the raised section.

8. The method of producing a laminate for a secondary battery according to any one of claims 5 to 7, wherein an interval of the plurality of positive electrodes when the plurality of positive electrodes are affixed to the surface of the first separator web is not less than 600 µm and not more than 1,500 µm.
